# EUROPEAN PATENT APPLICATION

(11) **EP 2 390 635 A1**
(43) Date of publication of application: **30.11.2011**
(21) Application number: 11155629.6
(22) Date of filing: 23.02.2011
(51) Int. Cl.: G01G 19/00

(54) **Device for measuring the weight of a sheet-like article, sheet processing device including this weight measuring device and method for measuring the weight of a sheet-like article**

(30) Priority: 25.05.2010 JP 2010119758
(71) Applicant: Kabushiki Kaisha Toshiba, Minato-ku, Tokyo 105-8001 (JP)
(72) Inventor: Asari, Yukio, Tokyo 105-8001 (JP); Todoriki, Toru, Tokyo 105-8001 (JP); Mitsuya, Yusuke, Tokyo 105-8001 (JP); Naruoka, Yoshihiko, Tokyo 105-8001 (JP); Hiramitsu, Naruaki, Tokyo 105-8001 (JP)
(74) Representative: Horn Kleimann Waitzhofer

(57) **Abstract**

A weight measuring device for measuring the weight of a sheet-like article, comprising: a conveying unit that is arranged at a conveying route to convey the sheet-like article to be measured, the conveying unit being adapted to rotate while contacting the sheet-like article without being subjected to a driving force from outside after receiving the sheet-like article from the conveying route, and transporting the sheet-like article in its rotation direction while supporting the weight of the sheet-like article; and a scale to measure the weight of the conveying unit in a state in which the conveying unit supports the weight of the sheet-like article and transports the sheet-like article.

## Description

This application is based upon and claims the benefit of priority from Japanese Patent Application No. P2010-119758, filed on May 25th, 2010; the entire contents of which are incorporated herein by reference.

### FIELD

Embodiments of a present specification are generally related with devices for measuring the weight of a sheet-like article, such as a mail item, a sheet processing device including such a weight measuring device, and a method for measuring the weight of a sheet-like article.

### BACKGROUND

Ordinarily, in mail processing machines, the weight of a mail item is measured while the mail item is being conveyed, in order to judge whether charge imprints, such as postage stamps, attached to the mail item correspond to the proper postage. As a method to measure the weight of the mail item while it is being conveyed, it is known to measure the weight of an entire conveying device arranged along a conveying route, while the mail item passes through the conveying device, for example.

### RELATED ART DOCUMENTS

Patent Document 1 JP 2002-263583A

### SUMMARY

However, if the weight of the mail item is measured by measuring the weight of the conveying device while the mail item passes through it, and the ratio of the weight of the mail item to the weight of the conveying device alone is small, then the weight of the mail item cannot be measured accurately. That is to say, if the conveying device is heavy, then the precision of the weight measurement of the mail item decreases accordingly. Ordinarily, the conveying device is provided with a mechanism for conveying the mail item, that is, conveying rollers and a motor, so that the weight of the conveying device is very heavy compared to the weight of the mail item.

Also, during the conveying of the mail item, a conveying force is applied to the conveying device to the mail item, so that the application of this conveying force may have an adverse influence on the weight measurement result. That is to say, by applying a conveying force on the mail item, the entire conveying device may be subject to vibrations or stress, so that the measurement result is not stable. In particular if the weight of the mail item is measured while the mail item is being conveyed at high speed, it is very difficult to eliminate vibrations and stress transmitted to the conveying device from the driving source, such as a motor.

It is an object of the present invention to provide a weight measuring device, a sheet processing apparatus including such a weight measuring device, and a weight measuring method, with which the weight of a sheet-like article can be accurately measured.

To attain this object, a weight measuring device in accordance with one embodiment of the present invention includes a conveying unit that is arranged at (or along) a conveying route to convey the sheet-like article to be measured, the conveying unit being adapted to rotate while contacting the sheet-like article without being subjected to a driving force from outside after receiving the sheet-like article from the conveying route, and transporting the sheet-like article in its rotation direction while supporting the weight of the sheet-like article; and a scale to measure the weight of the conveying unit in a state in which the conveying unit supports the weight of the sheet-like article and transports the sheet-like article.

### BRIEF DESCRIPTION OF THE DRAWINGS

Fig. 1 is a block diagram showing the configuration of a mail item sorting / aligning / stamping apparatus, which serves as an example of a sheet processing apparatus in accordance with an embodiment of the present invention;
Fig. 2 is a diagrammatic top view of the principal parts of a weight measuring device in accordance with a first embodiment of the present invention, which is built into a mechanical detection portion of the stamping apparatus in Fig. 1;
Fig. 3 is a side view of the weight measuring device in Fig. 2, taken from the arrow direction III;
Fig. 4 is a sectional view of a conveying roller pair in Fig. 3, taken along the line IV-IV;
Fig. 5 is a sectional view of a drive roller in Fig. 4, taken along the line V-V;
Fig. 6 is a block diagram of a control system controlling the operation of the weight measuring device in Fig. 2;
Fig. 7 shows operation diagrams to illustrate the operation of the weight measuring device in Fig. 2;
Fig. 8 is a flowchart illustrating the operation of the weight measuring device in Fig. 2 in conjunction with Fig. 7;
Fig. 9 is a diagrammatic top view illustrating the inward force acting on the weight measuring device in Fig. 2;
Fig. 10 is a diagrammatic top view showing an example of a configuration for cancelling the inward force illustrated in Fig. 9;
Fig. 11 is a diagrammatic top view showing the principal parts of a weight measuring device according to a second embodiment of the present invention;
Fig. 12 shows operation diagrams illustrating the operation of the weight measuring device in Fig. 11;
Fig. 13 is a diagrammatic top view illustrating the inward force acting on the weight measuring device in Fig. 11;
Fig. 14 is a diagrammatic top view showing an example of a configuration for cancelling the inward force illustrated in Fig. 13;
Fig. 15 is a diagrammatic top view showing the principal parts of a weight measuring device according to a third embodiment of the present invention;
Fig. 16 shows operation diagrams illustrating the operation of the weight measuring device in Fig. 15;
Fig. 17 is a diagrammatic top view illustrating the inward force acting on the weight measuring device in Fig. 15;
Fig. 18 is a diagrammatic top view showing an example of a configuration for cancelling the inward force illustrated in Fig. 17;
Fig. 19 is a diagrammatic top view showing a modification of the weight measuring device in Fig. 11;
Fig. 20 is a diagrammatic top view showing a modification of the weight measuring device in Fig. 15;
Fig. 21 is a diagrammatic top view of a weight measuring device according to a fourth embodiment of the present invention;
Fig. 22 is a cross-sectional view of the weight measuring device in Fig. 21, taken along line XXII-XXII;
Fig. 23 is a diagram illustrating the driving portion of a drive roller of the weight measuring device in Fig. 21;
Fig. 24 shows operation diagrams illustrating the operation of the weight measuring device in Fig. 21; and
Fig. 25 is a diagrammatic view of a driving source of a drive roller built into a weight measuring device according to a fifth embodiment of the present invention.

### DETAILED DESCRIPTION

Referring to the accompanying drawings, the following is a detailed description of embodiments of the present invention.

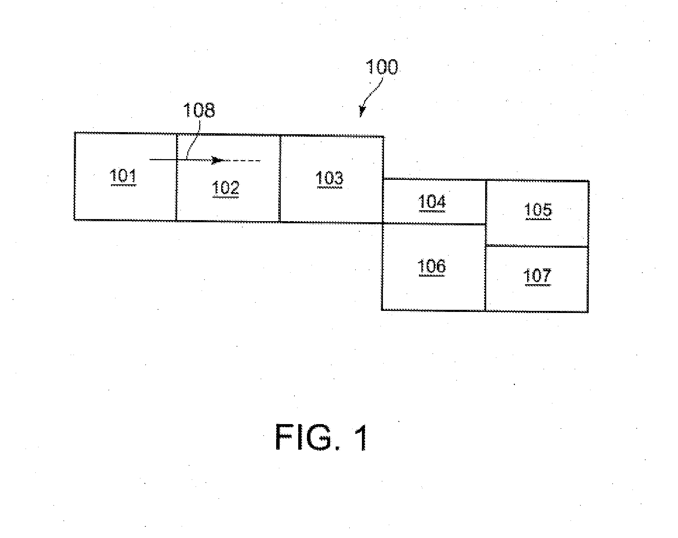

Fig. 1 shows a diagrammatic block diagram of a mail item sorting / aligning / stamping apparatus 100 (referred to in the following simply as "stamping apparatus 100"), which serves as an example of a sheet processing apparatus in accordance with the present invention.

The stamping apparatus 100 includes a supply portion 101, a mechanical detection portion 102, an OCR scanner portion 103, a twisting portion 104, a switchback portion 105, a stamping portion 106, and a sorting / stacking portion 107, arranged in the conveying direction of the mail item M (sheet-like article). Furthermore, the stamping apparatus 100 includes a conveying portion 108, which conveys a mail item M through these units. The stamping apparatus 100 also includes an operation panel not shown in the drawings, with which commands for various operations can be given to the apparatus, with which the operation mode can be switched and which displays warnings messages and the like.

The supply portion 101 receives for example a batch of standardized mail items M whose thickness, length in conveying direction, width in a direction perpendicular to the conveying direction and weight lie within a predetermined range, takes out these mail items one by one and supplies them to the downstream processing units. The conveying portion 108 includes a conveying route 1 which conveys the mail items M supplied to it through the following processing units 102 to 107.

The mechanical detection portion 102 detects metal, foreign items and hard items contained in the mail items M that are conveyed by the conveying portion 108 along the conveying route 1, detects double take-outs (that is, overlapped feeding) of mail items M as well as short gaps, and rejects mail items M that are judged to be not processable by the downstream processing units 103 to 107 to a rejection sheet stacker, which is not shown in the drawings. It should be noted that the mechanical detection portion 102 includes a weight measuring device 10, described later, which measures the weight of the conveyed mail items M.

The mechanical detection portion 102 furthermore detects in advance the length in conveying direction or the width of a mail item M before it reaches the weight measuring device 10, detects the passing of the front edge and the passing of the rear edge of the mail item M with a timing sensor 62 explained later, and obtains, in advance, information relating to the conveying position of this mail item M.

Moreover, the mechanical detection portion 102 measures the weight of the mail item M by letting the weight measuring device 10 operate as described below, based on the length, width and conveying position of the mail item M, and rejects any mail item M that is judged to have an abnormal weight by the weight measuring device 10 to a rejection sheet stacker not shown in the drawings.

The OCR scanner portion 103 optically reads the surface of the mail item M, converting it into an electric signal, and obtains sorting information, such as the postal code or the address written on the mail item M, as an image. Moreover, the OCR scanner portion 103 detects the presence and the position of any postage stamps (this also includes any charge imprints including fee indicators or the like) attached to the mail item M. Since the orientation (front/rear, top/bottom) of the mail item M supplied through the supply portion 101 is not the same for all mail items M, the OCR scanner portion 103 includes at least two scanner units to read both sides of the mail items M.

The twisting portion 104 includes a twisting path (not shown in the drawings) that conveys the mail items M while twisting them by 180° around their central axis, which extends along the conveying direction of the mail items M. That is to say, the twisting portion 104 flips over the mail items M without changing their conveying direction. The twisting portion 104 also includes a detour diverting path (straight path) (not shown in the drawings) for diverting mail items M transported into it without transporting them to the twisting path.

The switchback portion 105 includes two switchback mechanisms (not shown in the drawings) that reverse the conveying direction of the mail items M by receiving conveyed mail items M and outputting them in the opposite direction. Like the twisting portion 104 described above, also the switchback portion 105 includes a diverting path (straight path) for circumventing the two switchback mechanisms.

The stamping portion 106 includes a stamping hub not shown in the drawing, which rotates while contacting one surface of the conveyed mail item M. The stamping portion 106 stamps a cancellation mark while rotating this stamping hub in contact with the position of the postage stamp. In the present embodiment, all mail items M conveyed to the stamping portion 106 are aligned with respect to front/rear and top/bottom by passing through the twisting portion 104 and the switchback portion 105, so that the stamping hub is provided only on one side of the conveying route 1.

The sorting / stacking portion 107 sorts and stacks mail items M to a predetermined sorting position in accordance with the sorting information detected with the OCR scanner portion 103. Moreover, the sorting / stacking portion 107 includes a rejection sheet stacker not shown in the drawings, which prohibits the stamping with the stamping portion 106, of mail items M that are temporarily held in the switchback portion 105 and then transported forward, and to which rejected mail items are sent.

The stamping apparatus 100 with this configuration judges whether the postage mark, such as a stamp, read from the mail item M with the OCR scanner portion 103 corresponds to the proper postage in view of the weight of the mail item M as measured with the above-noted weight measuring device 10, and rejects mail items M that are judged to have insufficient postage, without stamping a cancellation mark on them with the stamping portion 106.

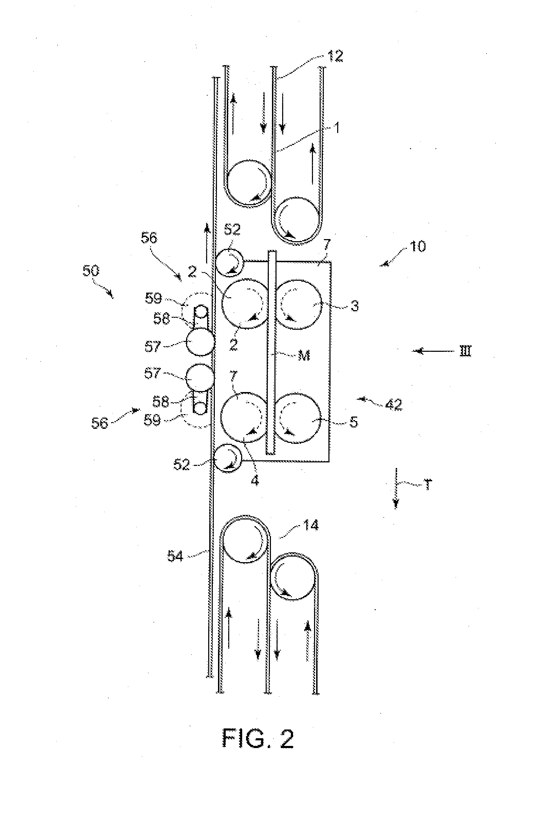

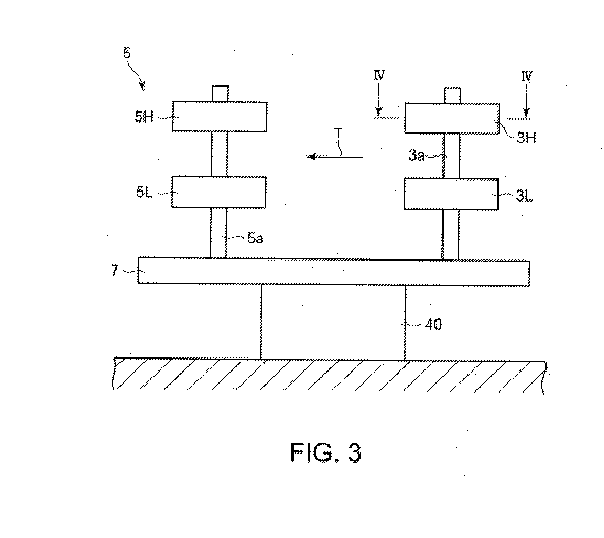

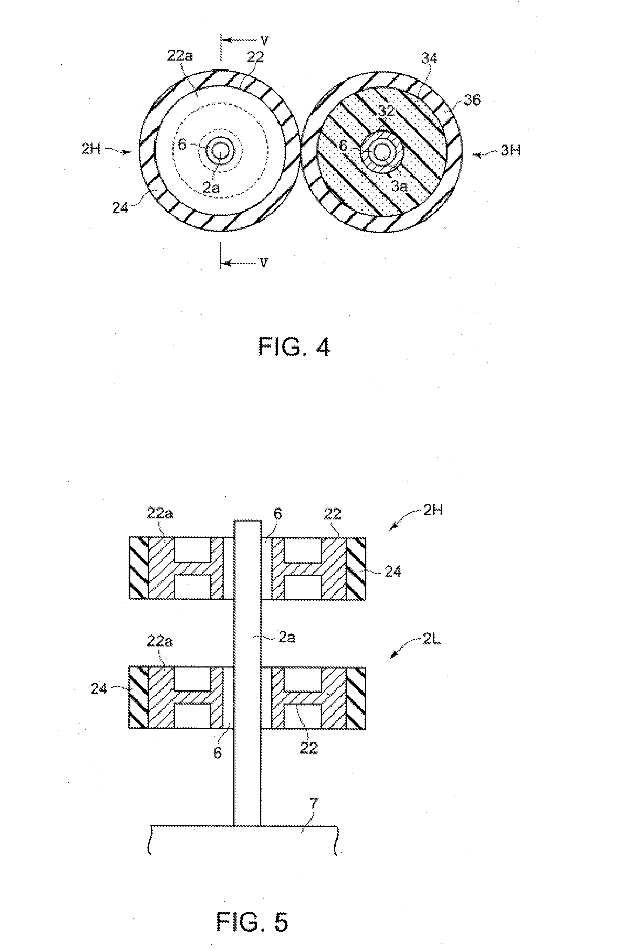

Fig. 2 is a diagrammatic top view of the principal parts of a weight measuring device 10 in accordance with a first embodiment of the present invention, which measures the weight of a mail item M passing by the mechanical detection portion 102 on the conveying route 1. Fig. 3 is a side view of the weight measuring device 10 in Fig. 2, seen from the arrow direction III. Fig. 4 is a sectional view of upper rollers 2H, 3H of an upstream conveying roller pair 2, 3 in Fig. 3, taken along the line IV-IV. Fig. 5 is a sectional view of the drive roller 2 in Fig. 4, taken at the line V-V along its rotation shaft 2a.

Referring to these Figs. 2 to 5, the following is an explanation of the configuration of the weight measuring device 10 according to the first embodiment of the present invention.
The weight measuring device 10 of this embodiment can successively measure the weight of a plurality of mail items M that are conveyed continuously at comparatively high speed on the conveying route 1, without stopping or decelerating the conveyance of the mail items M. It should be noted that in the present embodiment, the mail items M passing the mechanical detection portion 102 (that is, the weight measuring device 10) are conveyed in an upright orientation on the conveying route 1. That is to say, the conveying plane of the mail items M passing the weight measuring device 10 extends in the vertical direction.

As shown in Fig. 2, the weight measuring device 10 includes two sets of conveying roller pairs 2, 3, 4, and 5 that forward mail items M transported in an upright position from the supply portion 101 on the conveying route 1 in the arrow direction T shown in the drawing. As described later, immediately prior to measuring the mail items M, a driving force is applied to these two sets of conveying roller pairs 2, 3, 4, and 5, rotating them at the same circumferential speed as the conveying speed V of the mail items M. It should be noted that, when measuring the weight of the mail items M, the two sets of conveying roller pairs 2, 3, 4, and 5 contact the mail items M, which are conveyed in the arrow direction T at a predetermined speed V, so that their rotation follows the mail items M, and they do not exert a conveying force on the mail items M. In another words, the weight measuring device 10 is not forced by a driving force from outside after the mail items M is received.

However, the mail items M transported at the predetermined speed pass through the weight measuring device 10 by being forwarded by the conveying roller pairs 2, 3, 4, 5 rotating at the same circumferential speed as well as due to their own inertia, so that after the mail items M have passed through the weight measuring device 10, the conveying speed V of the mail items M is substantially sustained.

On the upstream side of the weight measuring device 10 in the conveying direction T of the mail items M, an upstream conveying portion 12 is provided, which transports the mail items M conveyed from the supply portion 101 at the conveying speed V into the weight measuring device 10. Moreover, on the downstream side of the weight measuring device 10 in the conveying direction T of the mail items M, a downstream conveying portion 14 is provided, which receives the mail items M that have passed through the weight measuring device 10 and conveys them at the conveying speed V.

As noted above, the weight measuring device 10 does not apply a conveying force to the mail items M while they pass through it, so that the mail items M passing through the weight measuring device 10 are basically conveyed in a free (unconstrained) state. However, the downstream conveying portion 14 conveys the mail items M at the same conveying speed V as the upstream conveying portion 12, so that even if the conveying speed of the mail items M has been slightly slowed down when passing through the weight measuring apparatus 10, the conveying speed of the mail items M is returned to the original speed V by the downstream conveying portion 14.

A predetermined gap is provided between the weight measuring device 10 and the upstream conveying portion 12, as well as between the weight measuring device 10 and the downstream conveying portion 14. These upstream and downstream gaps of the weight measuring apparatus 10 are provided in order to attain a state in which the mail items M are held only by the two sets of conveying roller pairs 2, 3, 4, 5, as shown in Fig. 2. The gaps on both sides have a predetermined length, so that mail items M can be handled whose length in the conveying direction T is longer than the length of the mail item M shown in the drawing.

The conveying roller pair 2, 3 arranged upstream in the transport direction T of the mail items M includes a drive roller 2 to which a driving force can be selectively applied by a driving unit explained later, and a driven roller 3 whose rotation follows that of the drive roller 2, the conveying route 1 being arranged between the drive roller 2 and the driven roller 3. The conveying roller pair 4, 5 arranged downstream in the transport direction T of the mail items M includes a drive roller 4 to which a driving force can be selectively applied by a driving unit explained later, and a driven roller 5 whose rotation follows that of the drive roller 4, the conveying route 1 being arranged between the drive roller 4 and the driven roller 5.

The two drive rollers 2 and 4 are placed on the left side of the conveying route 1 in the drawing, spaced apart from one another in the transport direction T, whereas the driven rollers 3 and 5 are arranged on the right side of the conveying route 1 in the drawing in opposition to and contacting the drive rollers 2 and 4 with the conveying route 1 arranged between them.

As shown in Fig. 3, the drive rollers 2, 4 and the driven rollers 3, 5 respectively include upper rollers 2H, 3H, 4H, 5H and lower rollers 2L, 3L, 4L, 5L, spaced apart vertically along their respective rotation shafts 2a, 3a, 4a, 5a. In Fig. 3, only the two driven rollers 3 and 5 are shown as representative rollers. It should be noted that the upper rollers 2H, 3H, 4H, 5H and the lower rollers 2L, 3L, 4L, 5L of this embodiment are rotatably attached to the rotation shafts 2a, 3a, 4a, 5a through bearings 6 (see Figs. 4 and 5).

That is to say, the bottom ends of the rotation shafts 2a, 3a, 4a, 5a of the rollers 2, 3, 4, 5 is fixed to a base 7 and they are each supported by the base 7 at least in a canterlever-like manner. Moreover, the upper rollers 2H, 3H, 4H, 5H and the lower rollers 2L, 3L, 4L, 5L can each freely rotate with respect to the rotation shafts 2a, 3a, 4a, 5a. Note that in the present embodiment, the base 7 extends substantially horizontally, and the four rotation shafts 2a, 3a, 4a, 5a extend substantially vertically along the conveying plane of the mail items M.

The distance between the rotation shafts 2a, 3a of the upstream conveying roller pair 2, 3 is set such that the outer circumferential surface of the upper roller 2H and the outer circumferential surface of the upper roller 3H contact each other on the conveying route 1, and the outer circumferential surface of the lower roller 2L and the outer circumferential surface of the lower roller 3L contact each other on the conveying route 1. Moreover, the distance between the rotation shafts 4a, 5a of the downstream conveying roller pair 4, 5 is set such that the outer circumferential surface of the upper roller 4H and the outer circumferential surface of the upper roller 5H contact each other on the conveying route 1, and the outer circumferential surface of the lower roller 4L and the outer circumferential surface of the lower roller 5L contact each other on the conveying route 1.

Referring to Figs. 4 and 5, the following is a detailed explanation of the structure of upper and lower rollers of the drive rollers 2, 4 and the driven rollers 3, 5, taking as an example the upper roller 2H of the drive roller 2 on the upstream side and the upper roller 3H of the driven roller 3 on the upstream side.

The lower roller 2L of the upstream drive roller 2 and the upper and lower rollers 4H and 4L of the downstream drive roller 4 have the same structure as the upper roller 2H of the upstream drive roller 2, which is explained here. Also, the lower roller 3L of the upstream driven roller 3 and the upper and lower rollers 5H, 5L of the downstream driven roller 5 have the same structure as the upper roller 3H of the upstream driven roller 3, which is explained here. Thus, a detailed explanation of these upper and lower rollers 2L, 4H, 4L, 3L, 5H, 5L has been omitted.

As shown in Figs. 4 and 5, the upper roller 2H of the drive roller 2 is rotatably attached via the bearing 6 to the rotation shaft 2a. The upper roller 2H includes a flywheel 22, which is provided on the outside of the bearing 6, and a rubber layer 24, which is provided on the outside of the flywheel 22. The rubber layer 24 of this upper roller 2H is slightly deformable, but is hardly deformed at all when a mail item M collides with it. It is preferable that the flywheel 22 is made of a relatively heavy metal, such as copper or iron, in order to make the moment of inertia of the upper roller 2H relatively high.

Moreover, the upper roller 3H of the driven roller 3 is attached rotatably to the rotation shaft 3a via the bearing 6, as shown in Fig. 4. This upper roller 3H includes a core metal 32 that is provided on the outside of the bearing 6, a sponge layer 34 that is provided on the outside of the core metal 32, and a rubber layer 36 that is provided on the outside of the sponge layer 34. The sponge layer 34 of this upper roller 3H is highly deformable, so that it can be considerably deformed when colliding with a mail item M.

That is to say, when a mail item M is inserted between the drive roller 2 and the driven roller 3, then the upper and lower rollers 3H and 3L of the driven roller 3 are deformed, absorbing the change of thickness of the mail item M. In this situation, if the thickness of the mail items M varies along the rotation shaft direction of the rollers, then the upper roller 3H and the lower roller 3L, which can rotate independently from each other with respect to the rotation shaft 3a, are deformed by different deformation amounts, thus preventing skewing of the mail item M.

As shown in Fig. 5, the flywheels 22 are built into the upper and lower rollers 2H and 2L of the drive roller 2. Each flywheel 22 is formed in such a shape that its volume is concentrated near its outer circumferential portion 22a, and is made of a comparatively heavy metal (for example copper or iron), whereas it is made thinner at a position near its rotation center. Thus, when a mail item M contacts the upper and lower rollers 2H and 2L of the drive roller 2 including the flywheels 22, the inertial force causing it to keep rotating is large, so that the rotation speed decreases only little.

Returning to Fig. 3, the weight measuring device 10 includes a weight sensor 40 that is attached to the lower side of the base 7. The weight sensor 40 of this embodiment is a six-axis force sensor. It is also possible to use a force sensor that is sensitive on three axes as the weight sensor. It should be noted that a force sensor as disclosed in JP 2010-230631A, the contents of which are hereby incorporated by reference, can be used.

The weight sensor 40 is arranged at the center of gravity of the base 7, which supports the rotation shafts 2a, 3a, 4a, 5a of the two sets of conveying roller pairs 2, 3, 4, 5, as noted above. That is to say, the weight sensor 40 measures the weight of an overall conveying unit 42 including the two sets of conveying roller pairs 2, 3, 4, 5 and the base 7.

That is to say, as shown in Fig. 2, the weight sensor 40 measures the weight of the overall conveying unit 42 in a state after the conveyed mail item M leaves the upstream conveying portion 12 and before it is transported to the downstream conveying portion 14. Thus, the weight sensor 40 measures the weight of the mail item M while it is being conveyed. That is to say, the weight of the mail item M can be calculated by subtracting the weight of the conveying unit 42 when it does not convey a mail item M.

In the present embodiment, the conveying unit 42 with which the weight sensor 40 measures the weight has a simple structure in which the upstream conveying roller pair 2, 3 and the downstream conveying roller pair 4, 5 are attached to the base 7, so that the apparatus can be made lighter than conventional conveying apparatuses. That is to say, there is no driving source, such as a motor, for applying a conveying force to the mail items M mounted to this conveying unit 42. Therefore, the ratio of the weight of the mail item M to the weight of the conveying unit 42 can be made large, and the precision with which the weight of the mail item M is measured can be increased.

Returning to Fig. 2, the weight measuring device 10 includes a driving mechanism 50 for applying a driving force to the drive rollers 2, 4 of the two sets of conveying roller pairs 2, 3, 4, 5. As shown in Fig. 2, the driving mechanism 50 includes a conveyor belt 54 of a separate system, which is driven at a predetermined speed by two rollers 52, and two pressing mechanisms 56 that press this conveyor belt 54 as a driving source against the two sets of drive rollers 2 and 4. The pressing mechanisms 56 each include a pressing roller 57, an arm 58 to the front end of which the pressing roller 57 is rotatively attached, and a motor 59 for turning this arm 58.

When the motors 59 of the pressing mechanisms 56 rotate, the arms 58 are swung and the conveyor belt 54 is pressed against the drive roller 2 by the pressing rollers 57 attached to the front ends of the arms 58. Thus, the driving force of the conveyor belt 54 is transmitted to the drive rollers 2, 4.

In the present embodiment, the drive rollers 2, 4 are provided such that their upper rollers 2H, 4H and their lower rollers 2L, 4L, which are spaced apart in vertical direction, can rotate independently, so that a driving force needs to be applied to these rotatable upper and lower rollers independently. For this reason, in the present embodiment, two pressing mechanisms 56 are provided for the drive rollers 2, 4, and there are also two conveyor belts 54, corresponding to the upper and lower rollers 2H, 2L, 4H, 4L. However, to keep the following explanations simple, only the pressing mechanism 56 shown in the drawings is explained in the following.

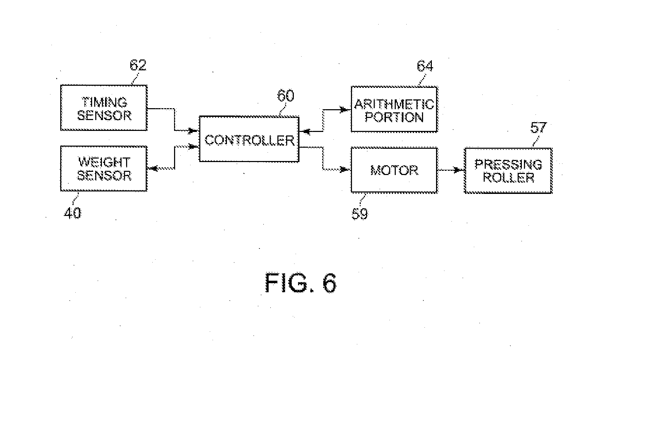

Fig. 6 is a block diagram of a control system controlling the operation of the weight measuring device 10 having the above structure.
A timing sensor 62, a weight sensor 40, an arithmetic portion 64 and the motors 59 of the pressing mechanisms 56 are connected to a controller 60 of the weight measuring device 10. The timing sensor 62 is arranged further to the upstream side in conveying direction of the mail items M than the weight measuring device 10, and detects the passage of a front edge and a rear edge of a mail item M at a predetermined position. This timing sensor 62 includes a light-emitting portion and a light-receiving portion, not shown in the drawings, that oppose each other across the conveying route 1.

Based on the weight of the conveying unit 42 that has been detected by the controller 60 with the weight sensor 40, the arithmetic portion 64 calculates the weight of the mail item M that passes the conveying unit 42. That is to say, the arithmetic portion 64 calculates the weight of the mail item M by subtracting the empty weight of the conveying unit 42, which has been measured in advance, from the weight of the conveying unit 42 while it is conveying the mail item M.

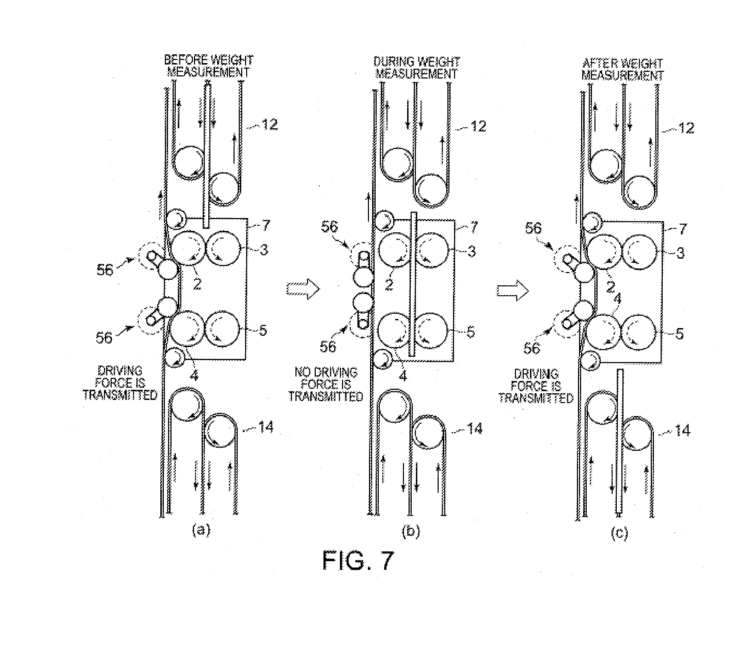

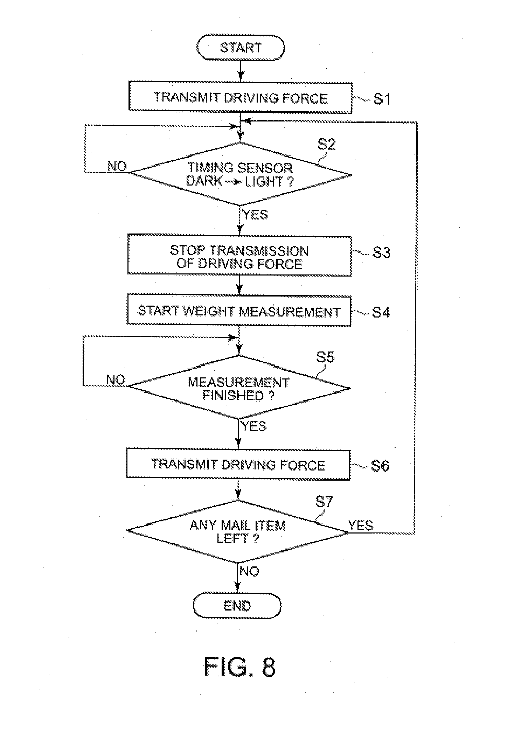

Referring to Figs. 7 and 8, the following is an explanation of the operation of the controller 60 of the weight measuring device 10 having the above-described structure. Figs. 7(a) to 7(c) are operation diagrams to illustrate the operation of the weight measuring device 10. Also, Fig. 8 is a flowchart to illustrate the operation of the weight measuring device 10 in conjunction with Fig. 7.

Before the mail item M is transported into the weight measuring device 10, the controller 60 of the weight measuring device 10 is first in a stand-by state, in which it operates the driving mechanism 50 as shown in Fig. 7(a), applies a driving force to the two drive rollers 2, 4 from outside the conveying unit 42, and causes the two sets of conveying roller pairs 2, 3, 4, 5 to rotate at the predetermined circumferential speed V (see Fig. 8, Step 1). That is to say, the controller 60 starts up the motor 59 of each of the pressing mechanisms 56 of the driving mechanism 50, puts the pressing rollers 57 into the position of Fig. 7(a), and presses the conveyor belt 54 of the separate system against the outer circumferential surface of the two drive rollers 2, 4.

The conveyor belt 54 is a conveyor belt of a separate system that runs within the mechanical detection portion 102, and runs at the same speed V as the conveyor belt of the upstream conveying portion 12 and the downstream conveying portion 14. Therefore, at Step 1 in Fig. 8, the drive rollers 2, 4 pressed against the outer circumferential surface of the conveyor belt 54 running at the speed V also rotate at the same circumferential speed V. It should be noted that when the two drive rollers 2, 4 rotate at a predetermined circumferential speed V in this manner, also the two driven rollers 3, 5, which contact the outer circumferential surfaces of the respective drive rollers, rotate at the same circumferential speed V.

After this, the controller 60 monitors the output of the timing sensor 62, and detects the passage of the front edge and the passage of the rear edge in conveying direction of the mail item M that is transported next into the weight measuring device 10. At this time, the controller 60 detects the length in the conveying direction of the mail item M based on the time period from the dark state to the light state of the timing sensor 62 and the conveying speed V of the mail item M, and detects the passage of the rear edge of the mail item M based on the fact that the timing sensor 62 has gone from its dark state to the light state (Step 2).

After the controller 60 has detected the passage of the rear edge in conveying direction of the mail item M in Step 2 (Step 2: YES), a timer not shown in the drawings is set, and the timing at which the rear edge in conveying direction of the mail item M leaves the upstream conveying portion 12 is obtained. Then, after the rear edge in conveying direction of the mail item M has left the upstream conveying portion 12, the controller 60 stops the transmission of the driving force to the drive rollers 2, 4, so that the weight measurement of the mail item M can be started at a suitable timing (Step 3). That is to say, at this time, the controller 60 starts up the motor 59 of each of the pressing mechanisms 56 of the driving mechanism 50, and puts the pressing rollers 57 into the position of Fig. 7(b).

What is referred to here as "suitable timing" means a timing after the transmission of the driving force to the drive rollers 2, 4 has been stopped and after a time has passed such that undesired vibrations and stress concentrations in the conveying unit 42 have attenuated and are substantially gone, so that a more accurate weight measurement becomes possible. It should be noted that in this case, the timing at which the transmission of the driving force in Step 3 is stopped may also be a timing prior to when the rear edge in the conveying direction of the mail item M has left the upstream conveying portion 12.

In this state, the mail item M passes the conveying unit 42 in a state in which it is free, due to its own inertial force. At this time, no conveying force is applied by the conveying unit 42 to the mail item M, so that until the front edge in conveying direction of the mail item M is passed on to the downstream conveying portion 14, the conveying speed of the mail item M is gradually decelerated. However, in this situation, the two sets of conveying roller pairs 2, 3, 4, 5 rotate at a predetermined speed V due their own inertial force, so that there is no risk that a force is exerted that might impede the conveying of the mail item M at least with regard to the conveying roller pairs.

Rather, the two drive rollers 2, 4 are provided with flywheels 22, so that it is conceivable that the proportion of the speed decrease becomes lower for the upper and lower rollers 2H, 2L, 4H, 4L of the drive rollers 2, 4. In this case, the conveying speed V of the mail item M can be substantially sustained by applying a very small conveying force from the drive rollers 2, 4 to the mail item M whose conveying speed is about to decrease.

In any case, after the transmission of the driving force has ceased in Step 3, the controller 60 begins the weight measurement of the conveying unit 42 at the above-described suitable timing (Step 4). In this situation, the controller 60 detects the weight of the conveying unit 42 while it is conveying the mail item M with the arithmetic portion with the weight sensor 40, and calculates, with the arithmetic portion 64, the weight of the mail item M by subtracting from this the weight of the conveying unit 42 that has been detected in advance.

When the weight measurement of the mail item M has finished (Step 5: YES), the controller 60 restarts the transmission of the driving force to the two drive rollers 2, 4 for the next mail item M (Step 6). That is to say, in this situation, like in Step 1, the controller 60 starts up the motor 59 of each of the pressing mechanisms 56 of the driving mechanism 50, puts the pressing rollers 57 into the situation shown in Fig. 7(c), and presses the conveyor belt 54 against the outer circumference of the two sets of drive rollers 2, 4.

It should be noted that the timing when the transmission of the driving force to the drive rollers 2, 4 is restarted in Step 6 does not necessarily have to be a timing after the mail item M has been completely handed over to the downstream conveying portion 14, but may also be a timing that is slightly before that, as long as the weight measurement of the mail item M has been completed. That is to say, in the present embodiment, the object is to measure the weight of the mail item M with high precision while it is being conveyed, so that as long as the weight measurement has finished, there is no problem in applying an external force to the mail item M.

The controller 60 continues the processing of Step 1 to Step 6 as described above until there are no more mail items M to be processed, and at the time when there are no more mail items M to be processed (Step 7: NO), the measurement operation is finished.

In this manner, with the present embodiment, since there is no driving source, such as a motor, mounted to the conveying unit 42, the conveying unit 42 can be made correspondingly lighter. Furthermore, with the present embodiment, the rotation shafts 2a, 3a, 4a, 5a of the conveying roller pairs 2, 3, 4, 5 of the conveying unit 42 are fixed to the base 7, and the upper and lower rollers 3H, 3L, 5H, 5L of the driven rollers 3 and 5 are rubber rollers including a sponge layer, so that there is no need for a spring or the like to press the driven rollers against the drive rollers, so that the conveying unit 42 can be made correspondingly lighter.

Furthermore, with the present embodiment, the rotation shafts 2a, 3a, 4a, 5a of the conveying roller pairs 2, 3, 4, 5 are fixed to the base 7 in a cantilever state, so that a frame for holding both ends of the rotation axes is not necessary, and the conveying unit 42 can be made correspondingly lighter. Furthermore, with the present embodiment, the driven rollers 3 and 5 of the conveying roller pairs 2, 3, 4, 5 are rollers having a sponge layer, so that the weight of the rollers themselves can be reduced, and the conveying unit 42 can be made correspondingly lighter.

By reducing the weight of the conveying unit 42, as in the present embodiment, the ratio of the weight of the mail item M to that of the conveying unit 42 can be made relatively large, so that the weight of the mail item M can be measured with greater precision. Moreover, by reducing the weight of the conveying unit 42, the frequency response can be made faster, and weight measurements with a high response speed and high resolution become possible.

Furthermore, with the present embodiment, immediately before measuring the weight of the mail item M passing through the conveying unit 42, the pressing rollers 57 are retracted to the position shown in Fig. 7(b), so that no driving force is transmitted to the conveying roller pairs 2, 3, 4, 5. Therefore, no external force is applied to the conveying unit 42 during the weight measurement, so that it can be prevented that undesired vibrations are transmitted to the conveying unit 42 and have an adverse influence on the weight measurement.

It should be noted that in this case, the mail item M passes the conveying unit 42 while being supported by the conveying roller pairs 2, 3, 4, 5 that are rotated in advance at the predetermined circumferential speed V. At this time, since the drive rollers 2, 4 each include a flywheel, when the conveying speed of the mail item M passing through the conveying unit 42 with its own inertial force is about to decrease, it can be expected that they assist the conveyance, so that the speed decrease can be mitigated.

Furthermore, with the present embodiment, a conveyor belt 54 of a separate system that was there to begin with is used as the driving source for rotating the conveying roller pairs 2, 3, 4, 5 of the conveying unit 42. Therefore, there is no need to provide a dedicated driving source for the conveying unit 42, and the manufacturing costs of the apparatus can be reduced correspondingly.

Furthermore, with the present embodiment, to apply a driving force to the drive rollers 2, 4, the conveyor belt 54 is elastically pressed against the upper and lower rollers 2H, 2L, 4H, 4L. Therefore, the structure for the drive transmission can be made an elastically contacting structure, and there are no large vibrations in the conveying unit 42 when contacting or removing the driving mechanism 50 to or from the drive rollers 2, 4. That is to say, with the present embodiment, it is possible to suppress the problem that the conveying unit 42 vibrates during the weight measurement of the mail items M, the weight of the mail items M can be measured correspondingly more accurately, and it is possible to increase the measurement precision.

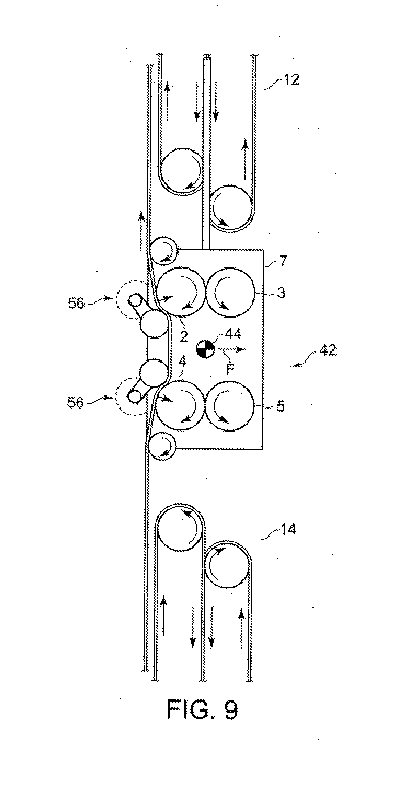

However, when the conveyor belt 54 is pressed against the drive rollers 2, 4 only from one side of the conveying unit 42, as in the present embodiment, then, as shown in Fig. 9, an inward force in the direction of the arrow F shown in the drawing acts on the pivot axis 44 of the weight sensor 40 on which the conveying unit 42 is supported. Such an inward force occurs every time the pressing mechanism 56 of the driving mechanism 50 operates and can result in a force that lets the conveying unit 42 swing.

However, this inward force can be measured using a six-axis force sensor as the weight sensor as in the present embodiment, and does not prevent an accurate weight measurement of the mail items M. However, if a six-axis force sensor is not used as the weight sensor, then it is possible that such an inward force has an adverse influence on the weight measurement.

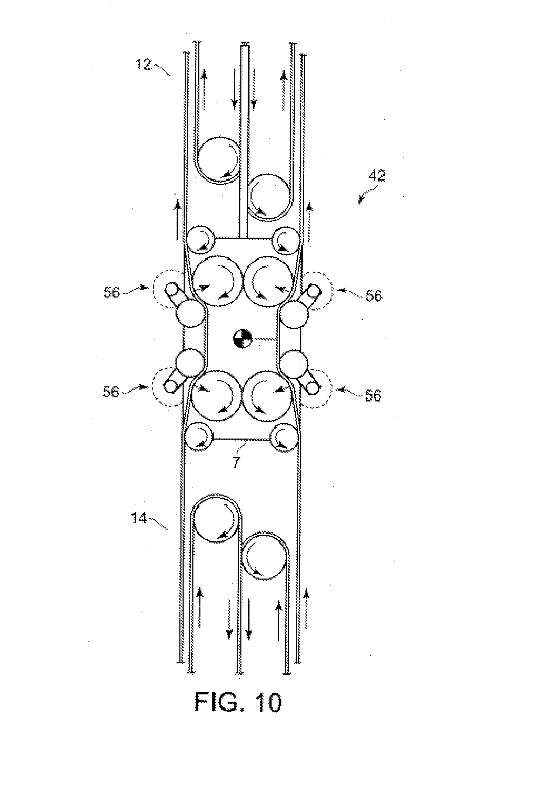

Therefore, a method for preventing this inward force is conceivable, in which two pressing mechanisms 56 are provided also on the side of the driven rollers 3, 5, as shown in Fig. 10. In other words, as shown in Fig. 10, by providing a plurality of pressing mechanisms 56 such that the external force applied to the pivot axis 44 of the weight sensor 40 is canceled, it is possible to prevent the above-described inward force, and it is possible to use for example an electromagnetically balanced scale or the like as the weight sensor 40 instead of a relatively expensive six-axis force sensor.

By letting approach zero at least one of the external forces applied from the outside to the conveying unit 42, such as the rotation moment exerted by the pressing mechanisms 56 on the pivot axis 44 of the weight sensor 40, the moment exerted by the pressing mechanisms 56 on the pivot axis 44 of the weight sensor 40, or the total force exerted by the pressing mechanisms 56 on the pivot axis 44 of the weight sensor 40, it is possible to reduce the remaining error or the load on the weight measuring device 10 when weight measuring. Thus, it is possible to improve the precision with which the weight of the mail items M is measured by the weight measuring device 10, and a more accurate measurement becomes possible.

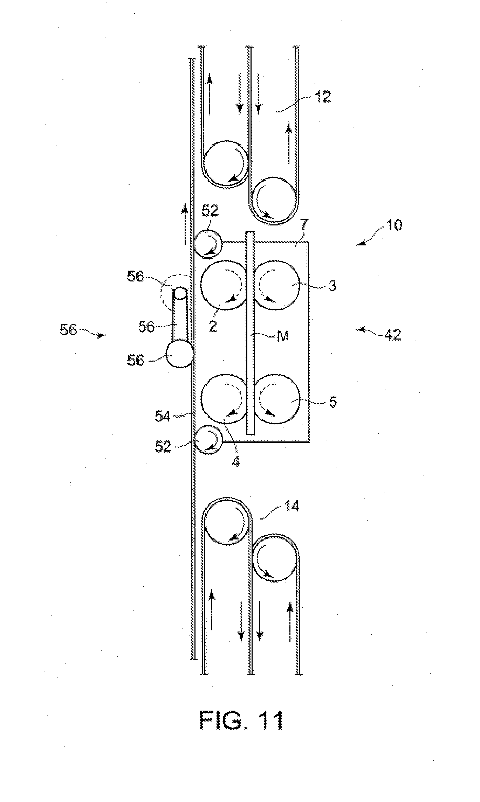

Next, referring to Figs. 11 to 14, a weight measuring apparatus 10 in accordance with a second embodiment of the present invention is explained. The weight measuring device 10 of this embodiment has substantially the same structure as the weight measuring device 10 according to the above-described first embodiment, except that the driving mechanism 50 for transmitting a driving force for the conveyor belt 54 to the two drive rollers 2, 4 includes a single pressing mechanism 56. Thus, in the following explanations, like reference numerals are assigned to structural elements having the same functions as in the weight measuring device 10 according to the first embodiment, and their detailed explanation is omitted.

As shown in Fig. 11, the weight measuring device 10 according to the present invention includes a single pressing mechanism 56, which transmits a driving force simultaneously to the two sets of drive rollers 2, 4. Actually, there are two pressing mechanisms 56, in correspondence with the upper and lower rollers 2H, 2L, 4H, 4L, but here only the depicted configuration is explained as a representative example.

This pressing mechanism 56 is similar to the ones of the first embodiment, and includes a pressing roller 57 pressing the conveyor belt 54 against the outer circumferential surface of the upper and lower rollers 2H, 2L, 4H, 4L of the drive rollers 2, 4, an arm 58 including this pressing roller 57 at its front end, and a motor 59 that lets this arm 58 swing.

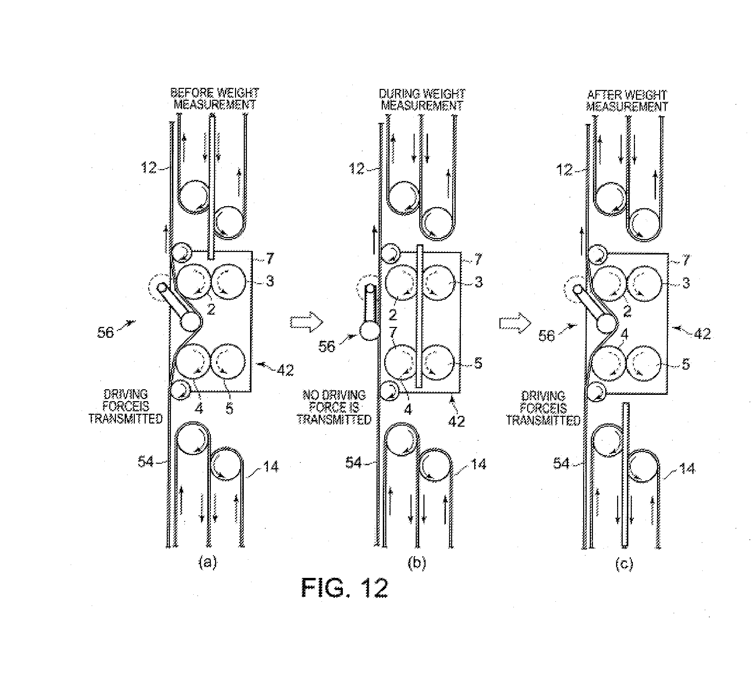

This weight measuring device 10 operates as shown in Fig. 12. That is to say, in the stand-by state before the mail item M is transported into the conveying unit 42, the pressing mechanism 56 operates in the position shown in Fig. 12(a), and the conveyor belt 54 is pressed at the same time against the two drive rollers 2, 4. Thus, the drive rollers 2, 4 are rotated at the circumferential speed V, and also the driven rollers 3, 5 rotate at the same circumferential speed.

Then, immediately before a weight measuring state is reached in which the mail item M travels on the conveying unit 42, the pressing mechanism 56 is operated to the state shown in Fig. 12(b), and the transmission of the driving force to the drive rollers 2, 4 is stopped. After this, the conveying roller pairs 2, 3, 4, 5 continue to rotate due to their inertial force. In this situation, the mail item M is conveyed by its own inertial force, and its weight is measured together with that of the conveying unit 42.

Furthermore, when the weight measurement of the mail item M is finished, the pressing mechanism 56 is set to the state shown in Fig. 12(c), and the driving force of the conveyor belt 54 is again transmitted to the two drive rollers 2, 4. This operation is continued until there are no more mail items M to be processed.

As shown above, in the present embodiment, it is possible to transmit a driving force from the outside of the conveying unit 42, and the same result as in the above-noted first embodiment can be attained. Moreover, compared to the above-noted first embodiment, since the number of pressing mechanisms 56 is reduced, the configuration of the device can be simplified, and the manufacturing costs of the device can be reduced.

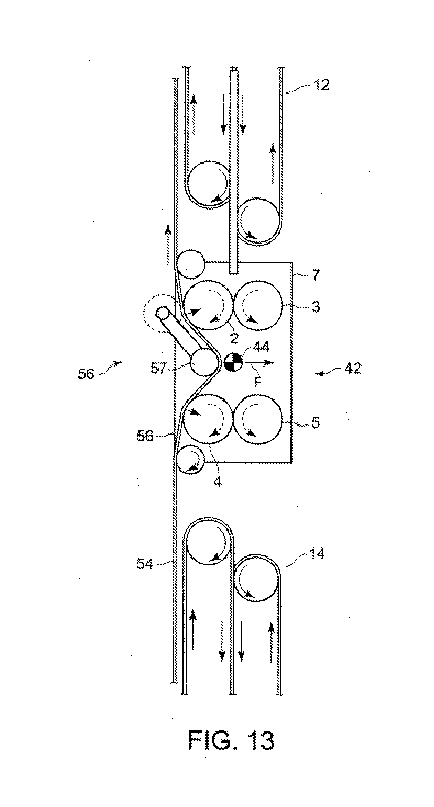

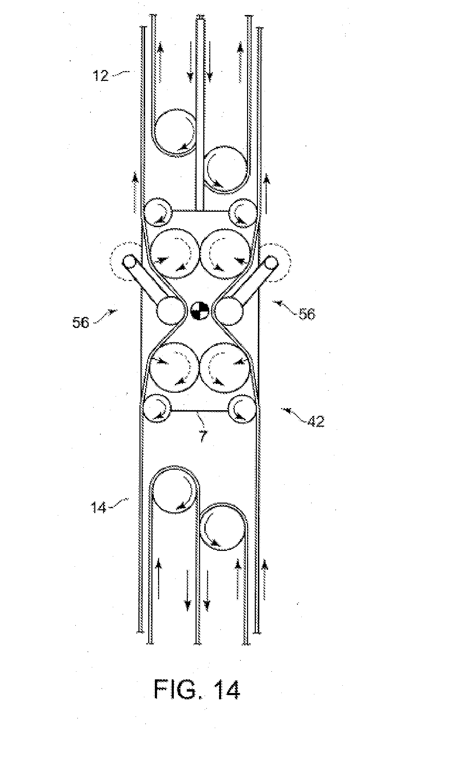

It should be noted that also in the present embodiment, as in the above-noted first embodiment, a pressing roller 57 for transmitting the driving force from one side of the conveying unit 42 is pressed against it from one side, so that the inward force indicated by the arrow F in Fig. 13 acts on the conveying unit 42. That is to say, to cancel this inward force, a method is conceivable, in which a separate pressing mechanism 56 is arranged also on the side of the driven rollers 3, 5, as shown in Fig. 14.

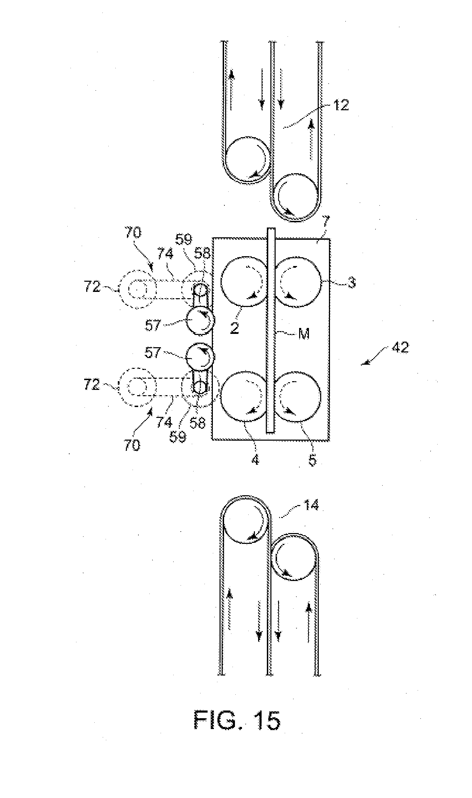

Referring to Figs. 15 to 18, the following is an explanation of a weight measuring device 10 according to a third embodiment of the present invention. In the weight measuring device 10 of this embodiment, pressing rollers 57 are pressed directly against the two drive rollers 2, 4, to rotate them. The remaining structure is substantially the same as that of the weight measuring device 10 according to the first embodiment. Thus, in the following explanations, like reference numerals are assigned to structural elements having the same functions as in the weight measuring device 10 according to the first embodiment, and their detailed explanation is omitted.

As shown in Fig. 15, the weight measuring device 10 according to the present embodiment includes two driving mechanisms 70 transmitting a driving force to each of the two driving rollers 2, 4. Actually, there are four driving mechanisms 70, in correspondence with the upper and lower rollers 2H, 2L, 4H, 4L, but here only the depicted configuration is explained as a representative example.

These driving mechanisms 70 press the pressing rollers 57 against the outer circumferential surface of the upper and lower rollers 2H, 2L, 4H, 4L of the drive rollers 2, 4, and rotate the pressing rollers 57. Thus, a driving force is transmitted to the drive rollers 2, 4, the drive rollers 2, 4 are rotated at the circumferential speed V, and also the driven rollers 3, 5 are rotated at the circumferential speed V.

That is to say, each of the driving mechanisms 70 includes an arm 58 having a pressing roller 57 at its front end, and a motor 59 for swinging that arm 58. Moreover, the driving mechanisms 70 each include a motor 72 for rotating the pressing roller 57 in the direction of the arrow in the drawing, and a timing belt 74 for transmitting the rotation of the motor 72 to the pressing roller 57.

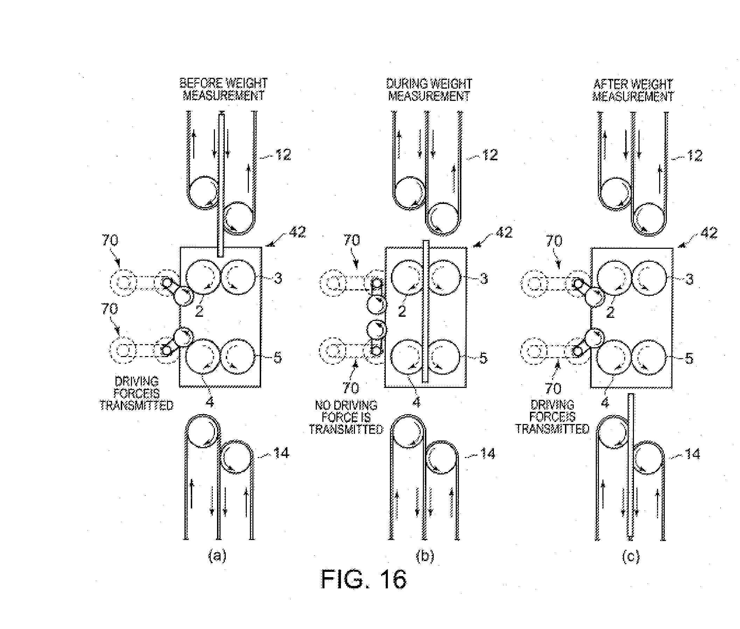

This weight measuring device 10 operates as shown in Fig. 16. That is to say, in the stand-by state before the mail item M is transported into the conveying unit 42, the driving mechanisms 70 are set into the position shown in Fig. 16(a), and the two pressing rollers 57 are pressed against the corresponding two drive rollers 2, 4. The two pressing rollers 57 are rotated in advance to the predetermined circumferential speed V, before they are pressed against the drive rollers 2, 4.

Then, immediately before a weight measuring state is reached in which the mail item M travels on the conveying unit 42, the arms 58 are swung, to set the two driving mechanisms 70 into the state shown in Fig. 16(b), the pressing rollers 57 are removed from the drive rollers 2, 4, and the transmission of the driving force to the drive rollers 2, 4 is stopped. In this situation, the rotation of the pressing rollers 57 continues.

After the transmission of the driving force is stopped, the conveying roller pairs 2, 3, 4, 5 continue to rotate due to their inertial force. In this situation, the mail item M is conveyed by its own inertial force, and its weight is measured together with that of the conveying unit 42.

Furthermore, when the weight measurement of the mail item M is finished, the arms 58 are swung again to set the driving mechanisms 70 to the state shown in Fig. 16(c), the pressing rollers 57 contact the drive rollers 2, 4, and the driving force is again transmitted to the two sets of drive rollers 2, 4. This operation is continued until there are no more mail items M left to be processed.

Thus, with the present embodiment, it is possible to transmit a driving force from the outside of the conveying unit 42, and to achieve the same effects as with the above-described first embodiment. Moreover, compared to the first embodiment, a device configuration is adopted in which the pressing rollers 57 are directly pressed against the drive rollers 2, 4, so that it is possible to achieve a higher response speed for switching between transmission and non-transmission of the driving force, and to accommodate high-speed processing of the mail items M.

Moreover, compared to the first embodiment, when the configuration of the present embodiment is adopted, a conveyor belt 54 of a separate system is not necessary as a driving force, so that the degree of freedom in the device layout can be increased, and it is possible to freely decide the location where the weight measuring device 10 is set up.

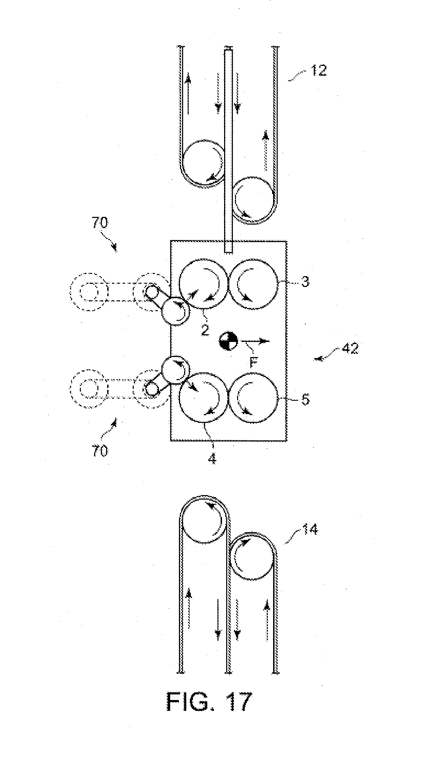

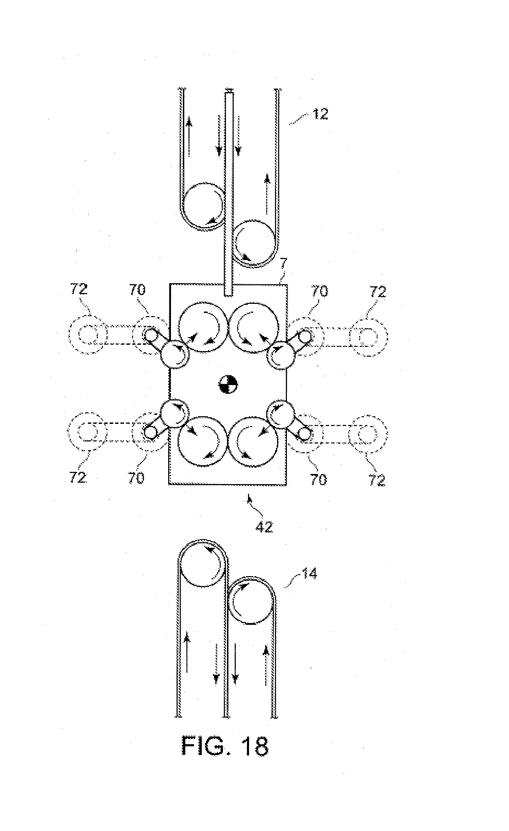

It should be noted that also with the present embodiment, as in the above-noted first embodiment, pressing rollers 57 for transmitting the driving force from one side of the conveying unit 42 are pressed against it from one side, so that the inward force indicated by the arrow F in Fig. 17 acts on the conveying unit 42. That is to say, to cancel this inward force, a method is conceivable, in which a separate driving mechanism 70 is arranged also on the side of the driven rollers 3, 5, as shown in Fig. 18.

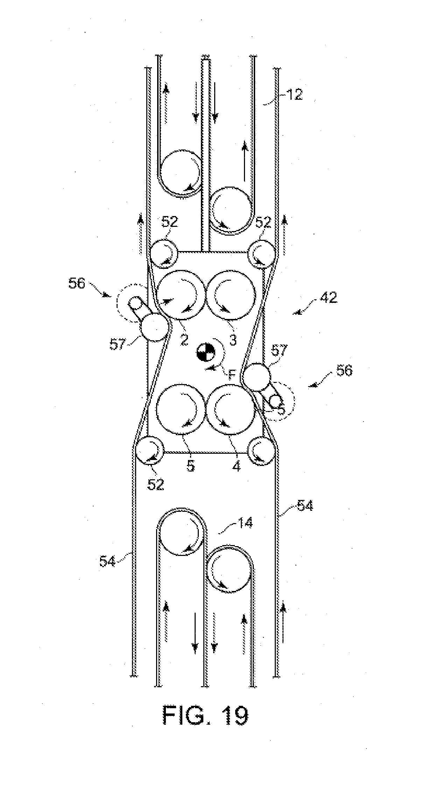

Fig. 19 shows a modification of the weight measuring device 10 according to the above-noted second embodiment. This weight measuring device 10 includes a structure in which a conveying roller pair 4, 5 on the downstream side in the conveying direction of the mail item M is transposed. That is to say, in this modification, the driven roller 5 is arranged on the left of the conveying route 1 in the drawing, and the drive roller 4 is arranged on the right of the conveying route 1 in the drawing.

Moreover, this weight measuring device 10 includes a separate pressing mechanism 56 for pressing a conveyor belt 54 of a separate system against the drive roller 4 on the downstream side in conveying direction. Also this pressing mechanism 56 functions like the pressing mechanism 56 corresponding to the drive roller 2, and presses the separate conveyor belt 54 against the drive roller 4.

In this modification, when the two pressing mechanisms 56 are operated and a driving force is transmitted to the drive rollers 2, 4, the rotation force indicated by the arrow F in Fig. 19 is applied to the conveying unit 42. However, this rotation force occurs in the moment when the conveyor belt 54 is pressed against the drive rollers 2, 4, and gradually attenuates due to the elasticity of the conveyor belt 54. Moreover, also in the present embodiment, a six-axis force sensor is used as the weight sensor 40, so that there is no risk of exerting an adverse influence on the weight measurement, even when such a rotation force occurs.

That is to say, also in the weight measuring device 10 according to this modification, the same effects can be attained as with the weight measuring device 10 according to the above-noted second embodiment.

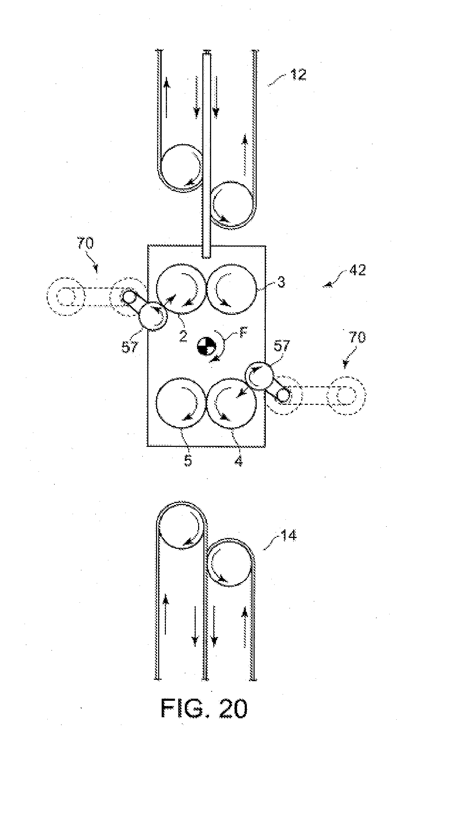

Fig. 20 shows a modification of the weight measuring device 10 according to the above-described third embodiment. Also this weight measuring device 10 includes a mechanism, in which the conveying roller pairs 4, 5 on the downstream side in conveying direction of the mail item M are transposed. That is to say, also in this modification, the driven roller 5 is arranged on the left of the conveying route 1 in the drawing, and the drive roller 4 is arranged on the right of the conveying route 1 in the drawing.

Moreover, in this weight measuring device 10, the driving mechanism 70 for transmitting a driving force to the drive roller 4 of the downstream conveying roller pair is arranged on the right side of the conveying unit 42 in the drawing. Also this driving mechanism 70 functions similarly to the driving mechanism 70 for the drive roller 2, and transmits a driving force to the drive roller 4.

Also in this modification, when the two driving mechanisms 70 are operated and a driving force is transmitted to the drive rollers 2, 4, the rotation force indicated by the arrow F in Fig. 20 is applied to the conveying unit 42. However, in the present embodiment, a six-axis force sensor is used as the weight sensor 40, so that there is no risk of exerting an adverse influence on the weight measurement, even when such a rotation force occurs.

That is to say, also in the weight measurement device 10 according to this modification, the same effects can be attained as with the weight measuring device 10 according to the above-noted third embodiment.

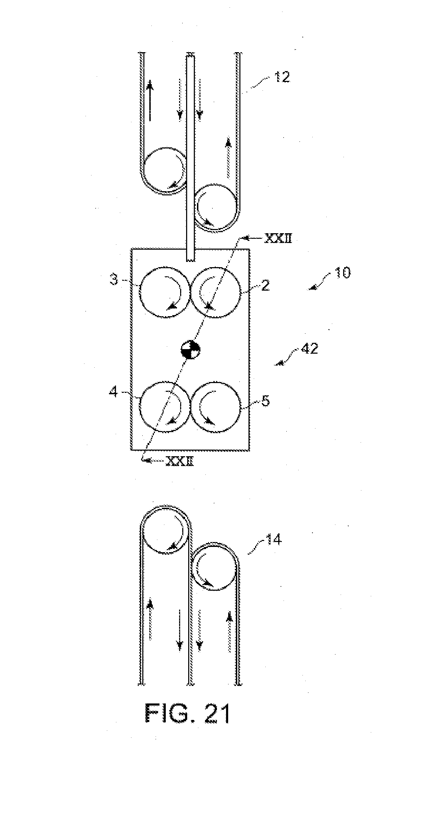

Referring to Figs. 21 to 24, the following is an explanation of a weight measuring device 10 according to a fourth embodiment of the present invention. Also in the following explanations, like reference numerals are assigned to structural elements having the same functions as the above embodiments, and their detailed explanation is omitted.

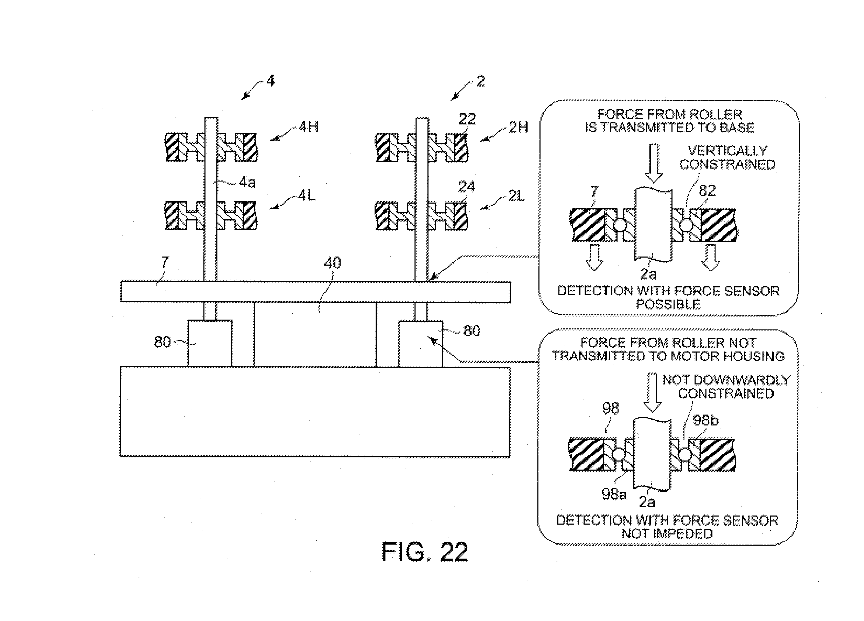

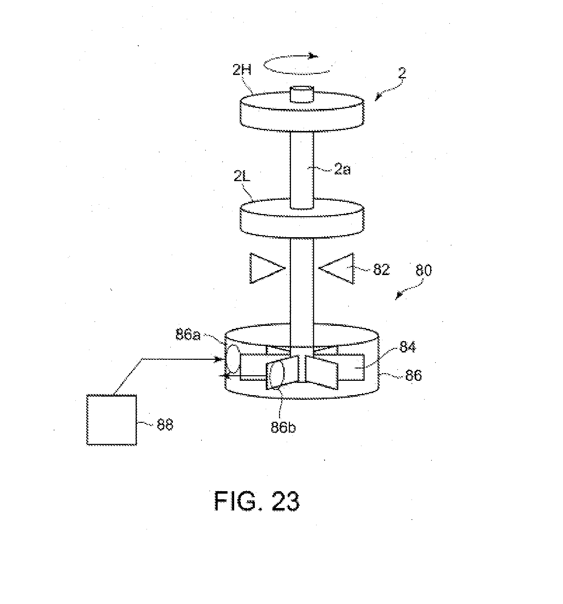

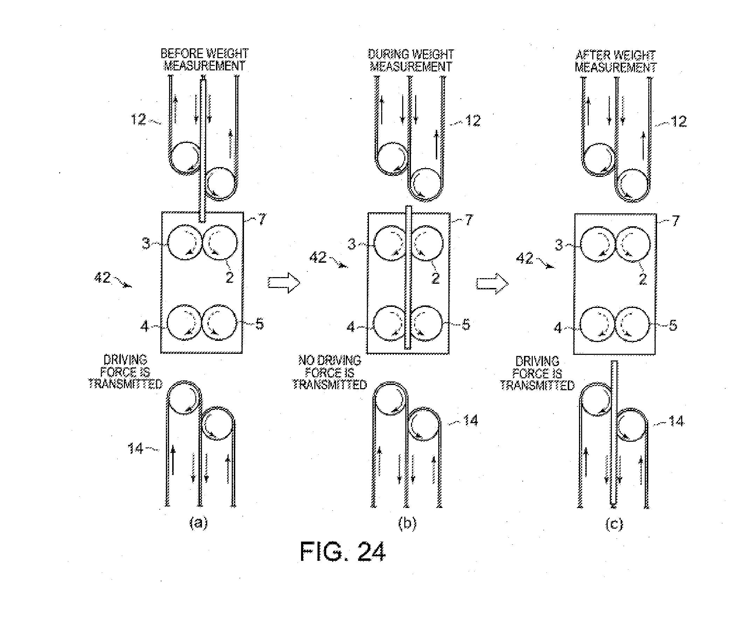

Fig. 21 is a top view of a weight measuring device 10 according to this embodiment. Fig. 22 is a cross-sectional view of principal part of the weight measuring device 10 of this embodiment. Fig. 23 is a diagram illustrating the drive source of the drive rollers built into the weight measuring device 10 of this embodiment. Fig. 24 shows operation diagrams to illustrate the operation of the weight measuring device 10 of the present embodiment.

As shown in Fig. 21, the weight measuring device 10 of the present embodiment includes an upstream conveying roller pair 2, 3 arranged upstream in conveying direction of the mail item M, a downstream conveying roller pair 4, 5 arranged downstream in conveying direction, and a base 7 rotatably supporting one end of rotation shafts 2a, 3a, 4a, 5a of the two conveying roller pairs 2, 3, 4, 5.

In this embodiment, of the upstream conveying rollers 2, 3, the driven roller 3 is arranged on the left side of the conveying route 1 in the drawing and the drive roller 2 is arranged on the right side of the conveying route 1 in the drawing. Of the downstream conveying roller pair 4, 5, the drive roller 4 is arranged on the left side of the conveying route 1 in the drawing and the driven roller 5 is arranged on the right side of the conveying route 1 in the drawing.

As shown in Fig. 22, the two drive rollers 2, 4 each include upper rollers 2H, 4H, and lower rollers 2L, 4L. In the present embodiment, the upper and lower rollers 2H, 2L, 4H, 4L are fixed non-rotatably to the rotation shafts 2a, 4a. That is to say, in the present embodiment, no bearings 6 are provided between the upper and lower rollers 2H, 2L, 4H, 4L and the rotation shafts 2a, 4a. In other words, the two drive rollers 2, 4 rotate by rotating the rotation shafts 2a, 4a.

Moreover, the base ends of the rotation shafts 2a, 4a of the drive rollers 2, 4 pass through the base 7 and extend downward from it. Furthermore, a driving source 80 for rotating the drive rollers 2, 4 is provided at the base end of the rotation shafts 2a, 4a for each of the drive rollers 2, 4. A bearing 82 is provided between each of the rotation shafts 2a, 4a and the base 7. These bearings 82 are thrust bearings that support the weight of the drive rollers 2, 4 and rotatably support the drive rollers 2, 4.

As shown in Fig. 23, a driving source 80 of the present embodiment include a plurality of impeller blades 84 subjected to an air stream, for example, and rotating the rotation shaft 2a, a chamber 86 in which the plurality of impeller blades 84 are accommodated rotatably and in a non-contacting manner and in which an airstream is generated in a circumferential direction, and an airstream generating device 88, such as a pump not shown in the drawing. The plurality of impeller blades 84 may be rectangular plates protruding radially from the rotation shaft 2a. Since the chamber 86 accommodates the plurality of impeller blades 84 in a non-contacting manner, it is separate from the conveying unit 42.

When air is fed into the chamber 86 through an inflow port 86a of the chamber 86, an airflow in circumferential direction is generated within the chamber 86. The air flowing within the chamber 86 is ejected from an outflow port 86b. This airflow presses against the plurality of impeller blades 84 and rotates the rotation shaft 2a. The airflow generating device 88 is connected to the controller 60, and the rotation speed of the drive roller 2 is controlled by controlling the amount of air fed into the chamber 86. It should be noted that only the driving source 80 of the drive roller 2 is shown in the drawing, but the same driving source 80 is also attached to the drive roller 4. The fluid rotating the impeller blades 84 is not limited to air and may also be water or oil.

The weight measuring device 10 having this structure operates as shown in Fig. 24.
First, in the stand-by state before the mail item M is fed into the weight measuring device 10 (the state shown in Fig. 24(a)), the controller 60 operates the airstream generating device 88, and the two drive rollers 2, 4 are rotated at the circumferential speed V. The driving source 80 of the present embodiment rotates the rotation shafts 2a, 4a by pressing against the impeller blades 84 with air, so that also when a driving force is applied to the drive rollers 2, 4, hardly any vibration is transmitted to the rotation shafts 2a, 4a.

After this, based on an output signal from the timing sensor 62, the controller 60 obtains the timing at which the rear edge in conveying direction of the next mail item M that is transported into the weight measuring device 10 leaves the upstream conveying portion 12, and stops the transmission of driving force to the drive rollers 2, 4 at the above-described suitable timing. In this situation, the drive rollers 2, 4 rotate freely. It should be noted that the upper and lower rollers 2H, 2L, 4H, 4L of the drive rollers 2, 4 each have a flywheel 22, so that the drive rollers 2, 4 continue to rotate, even when the transmission of the driving force is stopped.

In this state, the mail item M transported into the conveying unit 42 at the conveying speed V passes the conveying unit 42 due to its own inertial force, without applying a conveying force to it from the conveying roller pairs 2, 3, 4, 5. In this situation, the controller 60 measures the weight of the conveying unit 42 with the weight sensor 40, and calculates the weight of the mail item M that is passing through the conveying unit 42 with the arithmetic portion 64. This state is shown in Fig. 24(b).

After the weight measurement, the controller 60 again applies a driving force to the two drive rollers 2, 4, as shown in Fig. 24(c), and rotates the drive rollers 2, 4 at the circumferential speed V. As noted above, it is an object of the present embodiment to measure the weight of the mail item M, so that there is no problem in transmitting a driving force as long as the measurement of the weight of the mail item M has been finished.

Thus, with the present embodiment, as with the above-described embodiments, it is possible to apply a driving force to the drive rollers 2, 4 from the outside of the conveying unit 42, so that the weight of the mail item M can be accurately measured without impeding the conveying of the mail item M.

Moreover, with the present embodiment, an airflow acts on the impeller blades 84 attached to the rotation shafts 2a, 4 of the drive rollers 2, 4, to transmit the driving force, so that hardly any vibrations are transmitted to the drive rollers 2, 4, even in a state in which the driving force is applied. For this reason, according to the above explanation of the operation, the transmission of the driving force is stopped when the weight of the mail item M is measured, but it is no problem to perform the weight measurement while the driving force is still being applied.

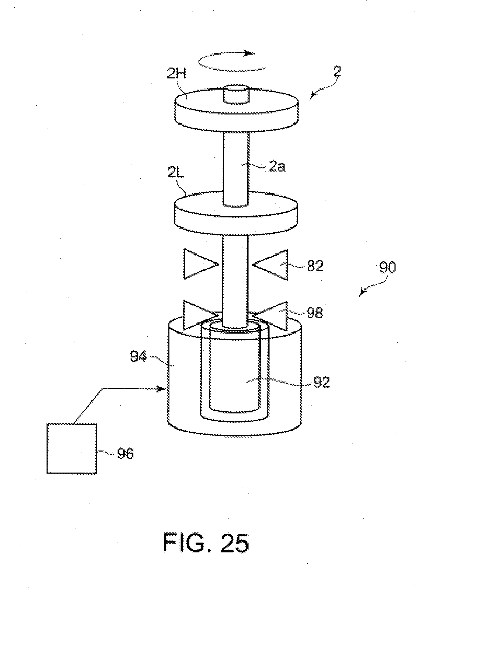

Fig. 25 is a diagrammatic view of a driving source 90 of a drive roller 2 built into a weight measuring device 10 according to a fifth embodiment of the present invention. This driving source 90 is provided for each of the rotation shafts 2a, 4a of the drive rollers 2, 4, but here, only the drive source 90 provided for the drive roller 2 is explained as a representative example. Also in the following explanations, like reference numerals are assigned to structural elements having the same functions as in the fourth embodiment, and their detailed explanation is omitted.

The driving source 90 of the present embodiment includes a magnet 92 fixed to a base portion of the rotation shaft 2a extending through the base 7, a coil 94 arranged around this magnet in a non-contacting manner, and a current supplying device 96 for letting a current flow through this coil 94. Alternatively, it is also possible to attach a coil to the rotation shaft 2a and provide a magnet outside it.

The controller 60 controls the current supplying device 96 to control the current amount flowing through the coil 94, and thus controls the rotation speed of the rotation shaft 2a, that is, the circumferential speed of the drive roller 2. That is to say, the controller 60 controls the current flowing through the coil 94 to rotate the drive roller 2 at the circumferential speed V

In the present embodiment, in addition to the above-noted bearing 82, a bearing 98 as shown in Fig. 22 is provided on the rotation shaft 2a of the drive roller 2. This bearing 98 has such a structure that, when a weight acts on the rotation shaft 2a from above in the drawing, it yields without supporting this weight. More specifically, the upper side in the drawing of a groove that is formed on the outer circumference of a cylindrical body 98a on the side of the rotation shaft 2a is open, and when this cylindrical body 98a moves downward in the drawing, the groove does not constrain the spheres 98b. Conversely, when the cylindrical body 98a is moved upward in the drawing, the groove of the cylindrical body 98a is engaged by the spheres, and the movement of the rotation shaft 2a is stopped.

Also the weight measuring device 10 with this configuration operates as shown in Fig. 24.
First, in the stand-by state before the mail item M is transported into the weight measuring device 10 (the state shown in Fig. 24(a)), the controller 60 controls the current supplying device 96 to let a current flow through the coil 94, rotating the two drive rollers 2, 4 at the circumferential speed V. The driving source 90 of the present embodiment rotates the rotation shafts 2a, 4a by electromagnetic force, so that also when a driving force is applied to the drive rollers 2, 4, there is hardly any vibration transmitted to the rotation shafts 2a, 4a.

After this, based on an output signal from the timing sensor 62, the controller 60 obtains the timing at which the rear edge in conveying direction of the next mail item M that is transported into the weight measuring device 10 leaves the upstream conveying portion 12, and stops the transmission of driving force to the drive rollers 2, 4 at the above-described suitable timing. That is to say, in this situation, the controller 60 controls the current supply device 96 to stop the supply of current to the coil 94.

In this situation, the drive rollers 2, 4 rotate freely. It should be noted that the upper and lower rollers 2H, 2L, 4H, 4L of the drive rollers 2, 4 each have a flywheel 22, so that the drive rollers 2, 4 continue to rotate due to their own inertial force, even when the transmission of the driving force is stopped.

In this state, the mail item M transported into the conveying unit 42 at the conveying speed V passes the conveying unit 42 due to its own inertial force, without applying a conveying force to it from the conveying roller pairs 2, 3, 4, 5. In this situation, the controller 60 measures the weight of the conveying unit 42 with the weight sensor 40, and calculates the weight of the mail item M that is passing through the conveying unit 42 with the arithmetic portion 64. This state is shown in Fig. 24(b).

After the weight measurement, the controller 60 again applies a driving force to the two drive rollers 2, 4, as shown in Fig. 24(c), and rotates the drive rollers 2, 4 at the circumferential speed V. As noted above, it is an object of the present embodiment to measure the weight of the mail item M, so that there is no problem in transmitting a driving force as long as the measurement of the weight of the mail item M has been finished.

Thus, also with the present embodiment, as with the above-described embodiments, it is possible to apply a driving force to the drive rollers 2, 4 from the outside of the conveying unit 42, so that the weight of the mail item M can be accurately measured without impeding the conveying of the mail item M.

Moreover, with the present embodiment, the driving force is transmitted by applying an electromagnetic force to the magnets 92 attached to the rotation shafts 2a, 4a of the drive rollers 2, 4, so that vibrations are hardly transmitted to the drive rollers 2, 4, even in a state in which the driving force is applied.

While certain embodiments have been described, those embodiments have been presented by way of example only, and are not intended to limit the scope of the inventions. Indeed, the novel methods and apparatuses described herein may be embodied in a variety of other forms; furthermore, various omissions, substitutions and changes in the form of the methods and apparatuses described herein may be made without departing from the spirit of the inventions. The accompanying claims and their equivalents are intended to cover such forms or modifications as would fall within the scope and spirit of the inventions.

For example, in the foregoing embodiments, it was explained that a flywheel 22 is built into each of the drive rollers 2, 4, but there is no limitation to this, and it is also possible to build flywheels 22 only into the driven rollers 3, 5, or to build flywheels 22 into all rollers. Furthermore, configurations in which the driving source for applying a driving force is provided separately from the conveying unit, and configurations in which a portion of the driving source remains in the conveying unit are possible, as long as the effect of the present working example is attained.

Furthermore, in the above-noted embodiments, it was explained that the weight of a mail item M serving as a sheet-like article is measured, but the sheet-like articles whose weight is to be measured are not limited to mail items.

Furthermore, the above embodiments were explained for the case of a conveying unit 42 including two sets of conveying roller pairs 2, 3, 4, 5, but there is no limitation to this, and it is sufficient if the conveying unit 42 includes at least one conveying roller pair. Furthermore, the base 7 of the conveying unit 42 is not an essential structural requirement of the invention, and it is also possible to replace the conveying roller pairs 2, 3, 4, 5 by a different structure, such as a conveyor belt or the like.
While certain embodiments have been described, these embodiments have been presented by way of example only, and are not intended to limit the scope of the inventions. Indeed, the novel methods and systems described herein may be embodied in a variety of the other forms; furthermore, various omissions, substitutions and changes in the form the methods and systems described herein may be made without departing from the sprit of the inventions. The accompanying claims and their equivalents are intended to cover such forms or modifications as would fall within the scope and spirit of the inventions.

## Claims

1. A weight measuring device for measuring the weight of a sheet-like article, comprising:
a conveying unit that is arranged at a conveying route to convey the sheet-like article to be measured, the conveying unit being adapted to rotate while contacting the sheet-like article without being subjected to a driving force from outside after receiving the sheet-like article from the conveying route, and transporting the sheet-like article in its rotation direction while supporting the weight of the sheet-like article; and
a scale to measure the weight of the conveying unit in a state in which the conveying unit supports the weight of the sheet-like article and transports the sheet-like article.

2. The weight measuring device according to claim 1,
further comprising a driving source provided separately from the conveying unit, to apply a driving force to the conveying unit so as to cause the conveying unit to rotate at a speed that corresponds to the conveying speed of the sheet-like article, before the sheet-like article is transported to the conveying unit.

3. The weight measuring device according to claim 2,
further comprising a controller to connect the driving source to the conveying unit such that the driving force is applied to the conveying unit when the scale does not measure the weight of the conveying unit.

4. The weight measuring device according to claim 2 or 3,
wherein the driving source is arranged at such a position that stress acting on the conveying unit is canceled when the driving force is transmitted to the conveying unit.

5. The weight measuring device according to claim 1,
further comprising a driving source to apply a driving force to the conveying unit, the driving source being arranged such that it does not contact the conveying unit.

6. The weight measuring device according to claim 5,
wherein the driving source applies the driving force to the conveying unit by using a force of a fluid.

7. The weight measuring device according to claim 5,
wherein the driving source applies the driving force to the conveying unit by letting an electromagnetic force act on the conveying unit.

8. The weight measuring device according to any of claims 1 to 7,
wherein the conveying unit comprises at least one conveying roller pair to clamp the sheet-like article and rotate in the transport direction of the sheet-like article; and
at least one roller of the conveying roller pair is provided with a flywheel.

9. A sheet handling apparatus comprising:
a weight measuring device according to any of claims 1 to 8; and
a processing portion to process the sheet-like article based on the weight measured with the weight measuring device.

10. The sheet handling apparatus according to claim 9,
further comprising a driving source provided separately from the conveying unit, to apply a driving force to the conveying unit so as to cause the conveying unit to rotate at a speed that corresponds to the conveying speed of the sheet-like article, before the sheet-like article is transported to the conveying unit; and
a controller to connect the driving source to the conveying unit such that the driving force is applied to the conveying unit when the scale does not measure the weight of the conveying unit.

11. The sheet handling apparatus according to claim 10,
wherein the driving source is arranged at such a position that stress acting on the conveying unit is canceled when the driving force is transmitted to the conveying unit.

12. The sheet handling apparatus according to claim 9,
further comprising a driving source to apply a driving force to the conveying unit, the driving source being arranged in such a state that it does not contact the conveying unit.

13. The sheet handling apparatus according to claim 12,
wherein the driving source applies the driving force to the conveying unit by using a force of a fluid.

14. The sheet handling apparatus according to claim 12,
wherein the driving source applies the driving force to the conveying unit by letting an electromagnetic force act on the conveying unit.

15. The sheet handling apparatus according to any of claims 9 to 14,
wherein the conveying unit comprises at least one conveying roller pair to clamp the sheet-like article and rotate in the transport direction of the sheet-like article; and
at least one roller of the conveying roller pair is provided with a flywheel.
